# DEMANDE DE BREVET EUROPEEN

(11) **EP 2 062 774 A1**
(43) Date de publication de la demande: **27.05.2009**
(21) Numéro de dépôt: 08291034.0
(22) Date de dépôt: 05.11.2008
(51) Int. Cl.: B60N 2/48

(54) **Gaine de montage d'une tige de montage d'un appui tête comprenant une patte déformable**

(30) Priorité: 20.11.2007 FR 0708136
(71) Demandeur: Centre d'etude et de recherche pour l'automobile (CERA), 51100 Reims (FR)
(72) Inventeur: Dauchez Fernand, 02400 Bezu Saint Germain (FR)
(74) Mandataire: Sayettat, Julien Christian

(57) **Abrégé**

L'invention concerne une gaine (1) moulée destinée à recevoir en coulissement une tige (8) de montage d'un appui-tête sur un dossier de siège de véhicule automobile, ladite gaine comprenant, issue de matière de sa paroi interne (2), une patte (3) déformable élastiquement saillant dans l'espace intérieur de ladite gaine, de sorte à réaliser un contact serrant contre ladite tige une fois introduite dans ladite gaine.

## Description

L'invention concerne une gaine moulée destinée à recevoir en coulissement une tige de montage d'un appui-tête sur un dossier de siège de véhicule automobile et un moule de réalisation d'une telle gaine.

Il est connu de réaliser une gaine moulée destinée à recevoir en coulissement une tige de montage d'un appui-tête sur un dossier de siège de véhicule automobile.

Dans une telle gaine, la tige est susceptible, du fait des éventuelles dispersions dimensionnelles de la tige et/ou de la gaine par rapport à ses dimensions nominales, de présenter un jeu par rapport au volume intérieur de la gaine. Cela se traduit par des vibrations lors du roulage du véhicule et entraîne un inconfort acoustique.

L'invention a pour but de pallier cet inconvénient.

A cet effet, et selon un premier aspect, l'invention propose une gaine moulée destinée à recevoir en coulissement une tige de montage d'un appui-tête sur un dossier de siège de véhicule automobile, ladite gaine comprenant, issue de matière de sa paroi interne, une patte déformable élastiquement saillant dans l'espace intérieur de ladite gaine, de sorte à réaliser un contact serrant contre ladite tige une fois introduite dans ladite gaine.

La patte ainsi agencée permet d'assurer un placage de la tige contre la gaine, ce qui supprime le jeu entre les deux et les vibrations associées.

Selon un deuxième aspect, l'invention propose un moule de réalisation d'une telle gaine.

D'autres particularités et avantages de l'invention apparaîtront dans la description qui suit, faite en référence aux figures jointes dans lesquelles :
- la figure 1 est une vue en coupe verticale (a) et horizontale (b) d'une gaine selon une première réalisation,
- la figure 2 est une vue en coupe verticale (a) et horizontale (b) d'une gaine selon une deuxième réalisation.

Dans cette description, les repères de positionnement dans l'espace (horizontal, vertical,...) sont pris en référence à la gaine disposée dans le véhicule.

En référence aux figures, on décrit une gaine 1 moulée destinée à recevoir en coulissement une tige 8 de montage d'un appui-tête sur un dossier de siège de véhicule automobile, ladite gaine comprenant, issue de matière de sa paroi interne 2, une patte 3 déformable élastiquement saillant dans l'espace intérieur de ladite gaine, de sorte à réaliser un contact serrant contre ladite tige une fois introduite dans ladite gaine.

Selon les réalisations représentées, un espace de débattement 4 est prévu entre la patte 3 et la paroi interne 2, de sorte que ladite patte puisse débattre élastiquement vers ladite paroi.

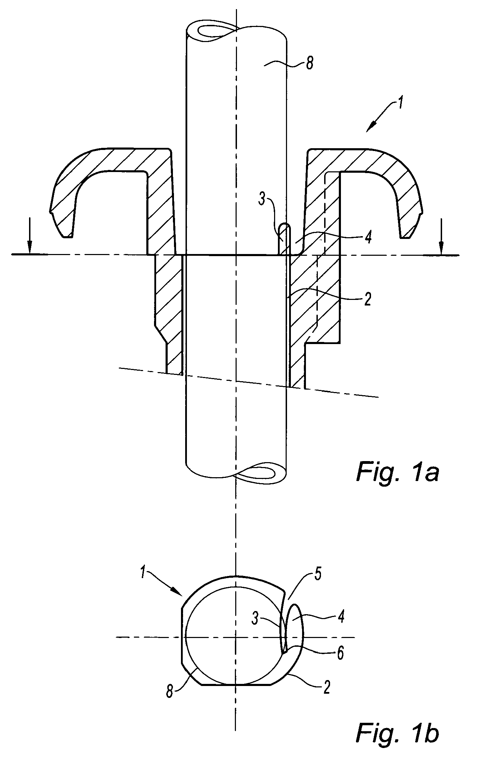

Selon la réalisation de la figure 1, la patte 3 est reliée à la paroi interne 2 uniquement par l'une de ses extrémités 5, son extrémité libre opposée 6 saillant de ladite paroi, de sorte à définir l'espace de débattement 4.

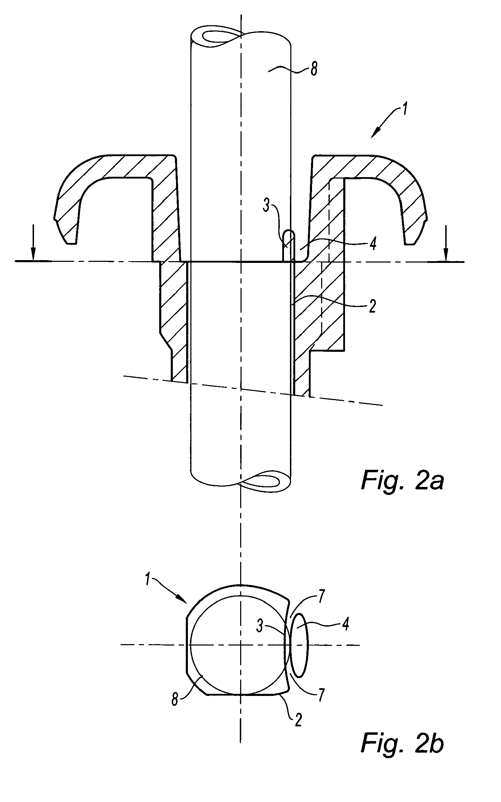

Selon la réalisation de la figure 2, la patte 3 est reliée à la paroi interne 2 uniquement par deux extrémités opposées 7, ladite patte présentant une courbure par rapport à la partie de ladite paroi qui lui fait face, de sorte à définir l'espace de débattement 4.

Selon les réalisations représentées, les extrémités de liaison 5,7 de la patte 3 à la paroi interne 2 sont disposées latéralement, de sorte que ladite patte s'étende perpendiculairement à l'axe de la gaine 1 entre ses extrémités 5,6,7.

On décrit à présent un moule, non représenté, de réalisation d'une gaine 1 comprenant deux broches entrant en contact par leurs extrémités libres respectives après fermeture dudit moule, de sorte à définir l'espace intérieur de ladite gaine, l'empreinte de la patte 3 étant localisée sur au moins l'une desdites extrémités, afin de permettre le démoulage de ladite gaine.

## Revendications

1. Gaine (1) moulée destinée à recevoir en coulissement une tige (8) de montage d'un appui-tête sur un dossier de siège de véhicule automobile, ladite gaine étant **caractérisée en ce qu'**elle comprend, issue de matière de sa paroi interne (2), une patte (3) déformable élastiquement saillant dans l'espace intérieur de ladite gaine, de sorte à réaliser un contact serrant contre ladite tige une fois introduite dans ladite gaine.

2. Gaine selon la revendication 1, **caractérisée en ce qu'**un espace de débattement (4) est prévu entre la patte (3) et la paroi interne (2), de sorte que ladite patte puisse débattre élastiquement vers ladite paroi.

3. Gaine selon la revendication 2, **caractérisée en ce que** la patte (3) est reliée à la paroi interne (2) uniquement par l'une de ses extrémités (5), son extrémité libre opposée (6) saillant de ladite paroi, de sorte à définir l'espace de débattement (4).

4. Gaine selon la revendication 2, **caractérisée en ce que** la patte (3) est reliée à la paroi interne (2) uniquement par deux extrémités opposées (7), ladite patte présentant une courbure par rapport à la partie de ladite paroi qui lui fait face, de sorte à définir l'espace de débattement (4).

5. Gaine selon la revendication 3 ou 4, **caractérisée en ce que** les extrémités de liaison (5,7) de la patte (3) à la paroi interne (2) sont disposées latéralement.

6. Moule de réalisation d'une gaine selon l'une quelconque des revendications 1 à 5, **caractérisé en ce qu'**il comprend deux broches entrant en contact par leurs extrémités libres respectives après fermeture dudit moule, de sorte à définir l'espace intérieur de ladite gaine, l'empreinte de la patte (3) étant localisée sur au moins l'une desdites extrémités, afin de permettre le démoulage de ladite gaine.
